Europäisches Patentamt

European Patent Office

Office européen des brevets

(11) Veröffentlichungsnummer: **0 004 541**
A1

# (12) EUROPÄISCHE PATENTANMELDUNG

(21) Anmeldenummer: 79100407.0

(22) Anmeldetag: 12.02.79

(51) Int. Cl.²: **F 16 B 25/00**
**B 21 H 3/04, B 21 H 3/06**

(30) Priorität: 17.02.78 CH 1774/78

(43) Veröffentlichungstag der Anmeldung:
17.10.79 Patentblatt 79/21

(84) Benannte Vertragsstaaten:
BE CH DE FR GB IT LU NL SE

(71) Anmelder: B E L I P A R, Société Anonyme
11, Boulevard de Prince Henry
Luxembourg(LU)

(72) Erfinder: Berset, Jean-Louis
Nelkenstrasse 5
CH-6032 Emmen(CH)

(72) Erfinder: Feldmann, Albert
Brisenstrasse 1
CH-6020 Emmenbrücke(CH)

(72) Erfinder: Mayer, Hermann
Schlüsselrain 17
CH-6024 Hildesrieden(CH)

(72) Erfinder: Muff, Anton
Emmenweg
CH-6105 Schachen(CH)

(74) Vertreter: Schmid, Rudolf et al,
c/o ISLER & SCHMID Patentanwaltsbureau
Walchestrasse 23
CH-8006 Zürich(CH)

(54) Schraube, insbesondere Gewindeformschraube und Walzwerkzeug zur Herstellung derselben.

(57) Bei einer Gewindeformschraube oder einer Sicherungsschraube ist der Schraubenschaft (1) unterteilt in wenigstens einen geraden Abschnitt (5, 5a, 5b) mit konstantem Aussendurchmesser ($D_0$) und einen Kalibrierabschnitt (4) mit grösserem Aussendurchmesser ($D_1$). Der Kerndurchmesser ($d_1$) des Kalibrierabschnittes (4) ist hingegen kleiner als der Kerndurchmesser ($d_0$) des geraden Abschnittes. Zudem ist die Zahnfussbreite ($m_1$) des Kalibriergewindeganges (7) grösser als die Zahnfussbreite ($m_0$) der Gewindegänge des geraden Abschnittes. Der Kalibrierabschnitt kann an jeder beliebigen Stelle des Schraubenschaftes angeordnet sein. Er gibt dem Innengewinde die endgültige Form.

Fig.1

·/· · ·

Croydon Printing Company Ltd.

EP 0 004 541 A1

**Fig. 2**

*1/1*

- 1 -

BEZEICHNUNG GEÄNDERT
siehe Titelseite

Schraube, insbesondere Gewindeformschraube

Die Erfindung betrifft eine Schraube, insbesondere eine Gewindeformschraube, mit wenigstens einem geraden Gewindeschaftabschnitt und wenigstens einem Kalibrierabschnitt, der sich über einen oder mehrere Gewindegänge erstreckt, wobei der Aussendurchmesser des Kalibrierabschnittes grösser ist als der Aussendurchmesser des geraden Gewindeabschnittes.

Aus der CH-PS 386.182 ist eine Gewindeformschraube bekannt, deren Querschnitt über die ganze Schaftlänge die Form eines dreiseitigen Gleichdicks aufweist mit drei gerundeten Kanten und dazwischenliegenden, radial zurückgesetzten Seiten. Die Stirnpartie der Schraube ist konisch verjüngt, um das Einführen in die Bohrung zu erleichtern. Beim Eindrehen der Gewindeformschraube in die Bohrung eines Werkstückes wird durch die vorstehenden Kanten der Schraube das Innengewinde erzeugt, wobei eine Materialverformung und -verdrängung im Werkstück stattfindet. Infolge der zurückversetzten Seiten wird Raum geschafft für das Werkstückmaterial, das sowohl in Umfangsrichtung als auch axial fliessen kann.

Im Gegensatz zum spanerzeugenden Gewindeschneidverfahren mit unterbrochenem Faserverlauf der Innengewindegänge wird der Faserverlauf beim Gewindeformen umgelenkt und das Material kalt verfestigt. Dadurch wird eine grosse Festigkeit der Verbindung gewährleistet bei hoher tragender Gewindeüberdeckung über die ganze Einschraublänge. Die Schraube sitzt satt, und die Belastung wird gleichmässig auf das Innengewinde übertragen.

Fertigungstechnisch gesehen, bewirkt die Gewindeformschraube eine dauernde Verformung des Werkstückes, in das sie eingedreht wird. Nun sind aber Werkstücke aus Metall oder Kunststoff innerhalb der durch die Materialeigenschaften gegebenen Grenzen etwas elastisch und das Material des Werkstückes neigt dazu, innerhalb der Elastizitätsgrenzen sich wieder zurückzuformen, d.h. in geringem Masse wieder in Richtung auf seinen ursprünglichen Zustand zurückzukehren, wenn der formende Druck aufhört. Die entspannende Rückfederung wird auch durch die geometrische Form des Werkstückes, in das die Schraube eingedreht wurde, bestimmt. Bei der Vielzahl der Einflussgrössen ist es nicht möglich, die Art der Innengewinderückfederung genau vorauszusehen. In jedem Falle entstehen nach dem Abschluss der Gewindeformung durch die Rückfederung radiale und axiale Druck- und Reibungskräfte, die auch nach dem eventuellen Austreten der Schraubenspitze auf der Werkstückrückseite noch relativ hohe Drehmomente bewirken.

In bezug auf den Drehmomentverlauf beim Einschrauben einer spanlos gewindeformenden Schraube in eine tiefe Bohrung oder in ein Sackloch, beispielsweise in einen Gussteil, lässt sich feststellen, dass das Drehmoment zuerst schnell ansteigt, wenn die Schraube die ersten Gewindegänge in die Bohrung formt. Das Drehmoment steigt sodann weiter an, weil das Eintrittsende der Schraube nach wie vor ein Gewinde in die Bohrung formt, währenddem eine zunehmende Anzahl von Gewindegängen des Schaftabschnittes in Reibberührung mit den Innengewindegängen kommt, die durch die
Eintrittsgewindegänge der Schraube bereits geformt wurden.

Dieser weitere Drehmomentanstieg ist beim Handeinschrauben
und beim Eindrehen mit Kraftschrauben mit einstellbarer
Drehmomentbegrenzung unerwünscht. Es wäre vielmehr vorteilhaft, das für das vollständige Eindrehen der Schraube
in das Werkstück erforderliche maximale Drehmoment so niedrig und gleichförmig wie möglich zu halten, um die Notwendigkeit einer Verstellung der Drehmomentbegrenzung oder
die Anpassung des Kernlochdurchmessers an die jeweilige
Einschraubtiefe zu verhindern.

Es gibt auch Anwendungsfälle, wo es zweckmässig ist, dass
die gewindeformende Schraube nach dem Austritt der Schraubenspitze aus einer Durchgangsbohrung ein sehr niedriges
Drehmoment für das weitere Einschrauben aufweist. Ein typisches Beispiel für eine derartige Anwendung ist eine
elektrische Anschlussschraube. Die elektrische Anschlussschraube muss eine Schraube mit einem niedrigen Drehmoment sein, bei der das zulässige Festziehdrehmoment möglichst zur Erzeugung einer hohen Klemmkraft des elektrischen Leitungsdrahtes ausgenutzt werden kann, statt nur
Reibungswiderstand beim Einschrauben der Schraube in das
Werkstück zu überwinden.

Nun sind bereits Gewindeformschrauben bekannt, bei denen
ein gewindeformender Abschnitt im Bereich der Schraubenspitze angeordnet ist. Die hinteren Gewindegänge des
Schraubenschaftes sitzen mit mehr oder weniger genau definiertem Spiel im durch den gewindeformenden Abschnitt
erzeugten Innengewinde. Die Reibung zwischen dem Werkstück und dem hinteren Schaftabschnitt ist wesentlich ver-

- 4 -                                                    0004541

ringert, ohne dass die übrigen Eigenschaften der Schraubverbindung, vor allem die Verbindungsfestigkeit, nachteilig beeinflusst werden.

Aus der US-PS 3.875.780 ist eine Schraube mit polygonalem
Querschnitt bekannt, bei der ein oder mehrere Kalibriergewindegänge mit grösserem Gewindeaussendurchmesser dadurch erzeugt werden, dass durch eine geeignete Walzbacke
der Flankenwinkel der Kalibriergänge im Bereich vom Flankendurchmesser in Richtung Gewindespitze verkleinert wird.
Der Bereich zwischen Flankendurchmesser und Gewindekerndurchmesser wird nicht verändert.

Aus herstelltechnischen Gründen muss der Kalibriergewindeabschnitt im Bereich der Schraubenspitze liegen, und die
Form der Kalibriergewindegänge ist ungenau, so dass auch
das Innengewinde keine genau definierte Form erhält. Das
zusätzliche Material für die Kalibriergänge wird durch
eine Stauchung von der Schraubenspitze her erhalten.

Bei einer anderen gewindeformenden Schraube mit kreisförmigem Querschnitt (US-PS 3.939.512) wird nach dem Gewindewalzen in einem zusätzlichen, aufwendigen Arbeitsgang die konische Schraubenspitze über eine Länge von
einigen Gewindegängen mit Spezialwerkzeugen durch radialen Pressdruck in eine dreiseitige Gleichdickform gedrückt, deren umschriebener Kreis grösser ist als der Umfang der Gewindegänge des folgenden Schraubenschaftes.
Dieses Herstellungsverfahren ist aufwendig und erlaubt
wiederum nur die Veränderung des Schraubenschaftgewindes
im Bereich der Schraubenspitze.

Schliesslich ist es aus der DT-AS 23 65 132 bekannt, bei
einer nicht gewindeformenden Schraube für eine bereits
vorhandene Gewindebohrung auf dem Schraubenschaft einen

Sicherungsabschnitt zu erzeugen, indem im Bereich dieses Abschnittes die Steigung entlang der Schraubenlänge kontinuierlich von einem Ausgangswert bis zu einem Minimalwert abnimmt und nach Erreichen des Minimalwertes wieder bis zum Ausgangswert zunimmt, wobei das Gewindeprofil symmetrische Flanken aufweist.

Auf einer gewindeformenden Schraube könnte ein derartiger Gewindeabschnitt mit wechselnder Gewindesteigung angebracht sein, um ein Innengewinde zu erzeugen. Die Normalgewindegänge des restlichen Schraubenschaftes könnten dann im vorgeformten Innengewinde mit Spiel laufen. Der Nachteil dieser Anordnung liegt in der Ausdehnungslänge am Schraubenschaft, die sich über mehrere Gewindegänge erstrecken muss und damit viele technische Anwendungsfälle verunmöglicht.

Die Erfindung stellt sich nun zur Aufgabe, die Nachteile der bekannten Schrauben mit Kalibrierabschnitt zu vermeiden. Insbesondere soll es möglich sein, einen oder mehrere Kalibrierabschnitte an irgendeiner Stelle auf dem Schraubenschaft anzuordnen.

Erfindungsgemäss wird dies so erreicht, dass der Kerndurchmesser des Kalibrierabschnittes kleiner ist als der Kerndurchmesser des geraden Gewindeschaftabschnittes und dass die Zahnfussbreite des Kalibriergewindeganges grösser ist als die Zahnfussbreite der Gewindegänge des geraden Abschnittes.

Bei der Schraube kann es sich sowohl um eine Gewindeformwie auch um eine Sicherungsschraube handeln. Bei einer gewindeformenden Schraube wird unabhängig von der Gewindeart bewirkt, dass die Schraube im geformten Innengewinde einer Durchgangsbohrung mit einem sehr niedrigen Drehmoment läuft und aus diesem Innengewinde durch Vibration nicht herausgerüttelt werden kann. In Sacklochbohrungen kann die Schraube mit Drehmomenten eingeschraubt werden, die sich mit zunehmender Eindrehtiefe kaum ändern.

Bei Befestigungsschrauben für bereits geschnittene Innengewinde wird durch den Kalibrierabschnitt an einer genau vorbestimmten Stelle der Schraube eine Rüttelsicherung verliehen.

Nachstehend werden anhand der Zeichnungen Ausführungsbeispiele der Erfindung näher erläutert. Es zeigen:

Fig. 1    eine Seitenansicht einer Gewindeformschraube, bei welcher der Kalibrierabschnitt in der Nähe der Schraubenspitze angeordnet ist,

Fig. 2    einen Schnitt durch einen Teil der Gewindegänge einer weiteren Gewindeformschraube in grösserem Massstab, wobei die Durchmesserunterschiede zur besseren Veranschaulichung überhöht dargestellt sind,

Fig. 3    einen Teilschnitt durch eine in eine Durchgangsbohrung eines Werkstückes eingeschraubte Gewindeformschraube,

Fig. 4    einen Längsschnitt durch eine in ein Werkstück eingeschraubte Sicherungsschraube mit Kalibrierabschnitt,

Fig. 5    eine Draufsicht auf einen Teil einer Gewindewalzbacke und

Fig. 6    einen Querschnitt nach der Linie VI-VI durch die Gewindewalzbacke gemäss Fig. 5.

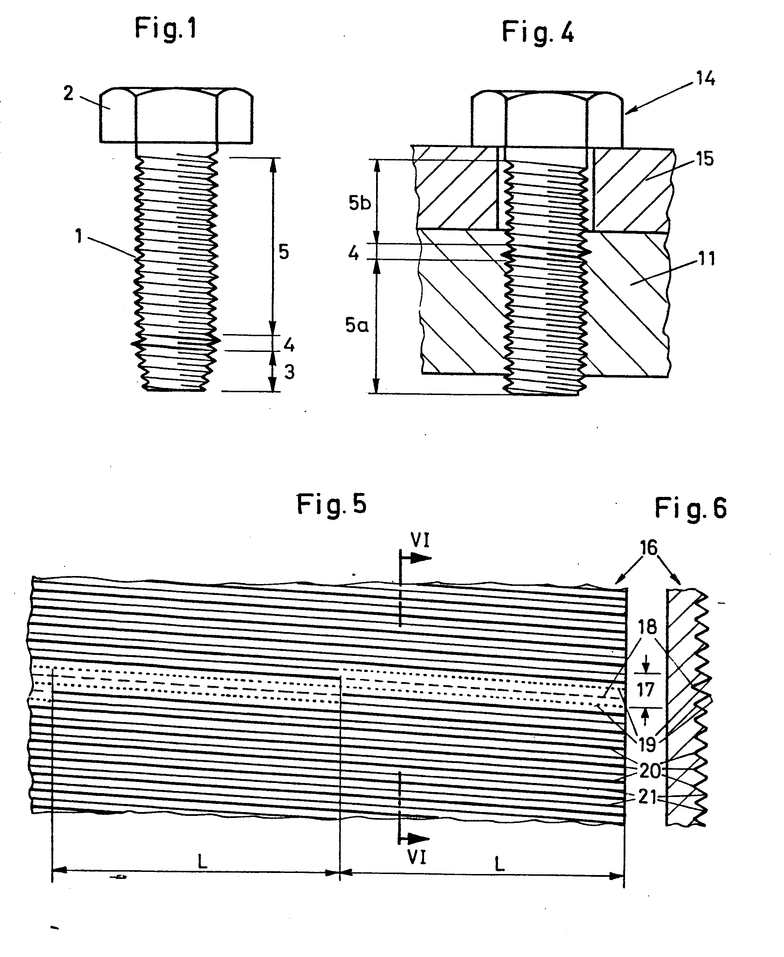

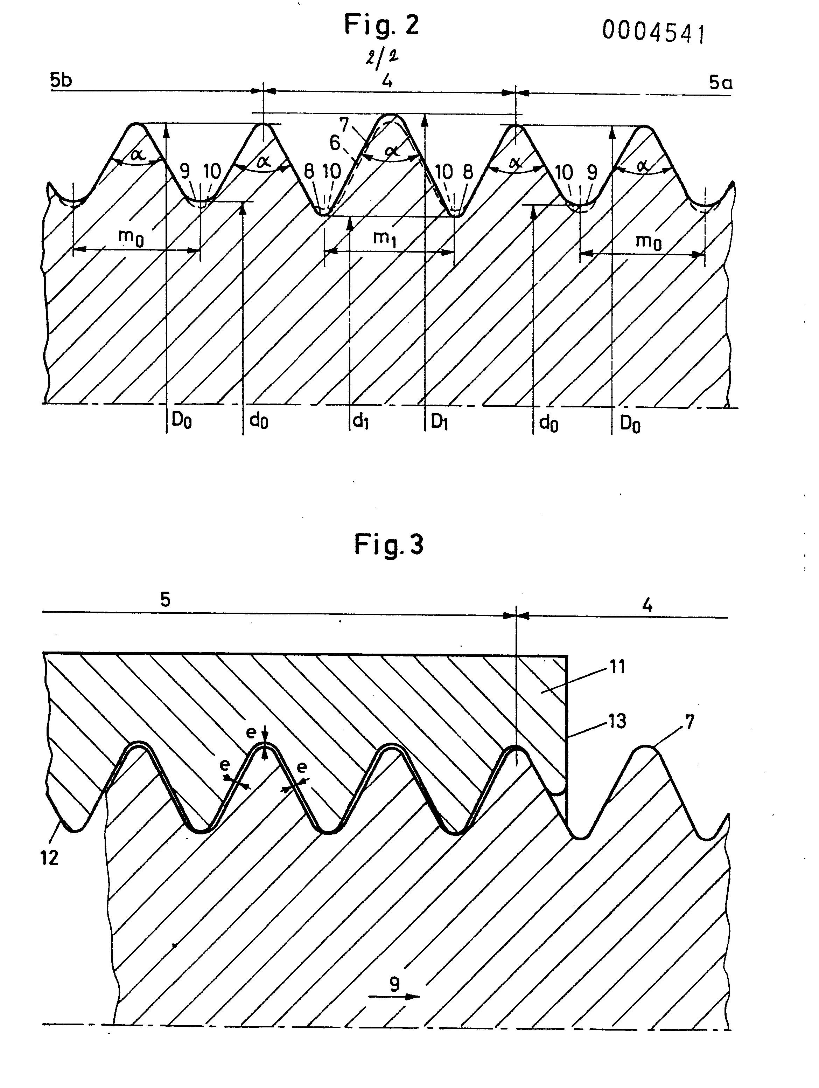

Die in der Fig. 1 gezeigte Gewindeformschraube besteht aus einem Gewindeschaft 1 und einem Sechskantschraubkopf 2. Der Schaft 1 ist unterteilt in einen Spitzenabschnitt 3, einen Kalibrierabschnitt 4 und einen geraden Abschnitt 5. Der Spitzenabschnitt 3 ist konisch verjüngt, um das Einführen des Schaftes in die Bohrung eines Werkstückes zu erleichtern.

Die eigentliche Formung des Innengewindes in die Wandung der Bohrung erfolgt durch den Kalibrierabschnitt 4, der etwa im Bereich des dritten bis fünften Gewindeganges angeordnet ist. Der an den Kalibrierabschnitt 4 anschliessende gerade Gewindeschaftabschnitt 5 läuft mit geringer Reibung im vorgeformten Innengewinde.

Die Unterschiede zwischen dem Kalibrierabschnitt und dem geraden Schaftabschnitt gehen aus der Fig. 2 hervor, die eine weitere Ausführungsform einer Gewindeformschraube zeigt. Bei dieser Schraube ist der Kalibrierabschnitt 4 zwischen zwei geraden Abschnittsstücken 5a und 5b angeordnet.

Durch die gestrichelte Linie 6 sind die Schraubengänge, beispielsweise eines genormten metrischen Gewindeprofils, angedeutet. Der Aussendurchmesser $D_1$ des Kalibrierabschnittes 4 ist grösser als der Aussendurchmesser $D_0$ der benachbarten geraden Schaftabschnitte 5a und 5b.

Beidseitig des erhöhten Kalibriergewindeganges 7 sind Ausgleichsrillen 8 angeordnet, die tiefer liegen als die entsprechenden Rillen 9 der geraden Schaftabschnitte 5a, 5b. Die Ausgleichsrillen 8 sind auch tiefer als die Rillen 10 der gestrichelt angedeuteten Normschraube. Der Gewindekerndurchmesser $d_0$ der geraden Schaftabschnitte 5a, 5b ist also etwas grösser als der Gewindekerndurchmesser $d_1$ des Kali-

brierabschnittes 4.

Der Gewindeflankenwinkel $\alpha$ ist bei den geraden Gewindeschaftabschnitten und beim Kalibrierabschnitt gleich. Hingegen kommt es im Uebergangsbereich zwischen den regelmässigen Gewindegängen und dem Kalibriergewindegang zu kleineren Schwankungen der Gewindesteigung.

Der erhöhte Zahn des Kalibriergewindeganges 7 ist im ganzen Gewindeflankenbereich breiter als die Zähne der regelmässigen Gewindegänge der geraden Schaftabschnitte. Insbesondere ist auch der Zahnfuss bzw. der Abstand $m_1$ der beiden Ausgleichsrillen 8 breiter als der entsprechende Abstand $m_0$ bei den geraden Abschnitten.

Für die Funktion des Kalibrierabschnittes 4 ist diese Verbreiterung des Kalibrierzahnes im gesamten Gewindeflankenbereich bzw. die Verbreiterung des Zahnfusses von $m_0$ auf $m_1$ bedeutungsvoll. Der Kalibrierabschnitt 4 kann an einer beliebigen Stelle des Schraubengewindeschaftes 1 liegen, also je nach praktischem Anwendungsfall in der Nähe der Schraubenspitze, des Schraubenkopfes oder der Schaftmitte.

Selbstverständlich könnten je nach Anwendungszweck mehrere Kalibrierabschnitte mit dazwischenliegenden geraden Gewindeabschnitten auf dem Schraubenschaft vorgesehen sein. Es wäre auch möglich, einen Kalibrierabschnitt mit mehreren erhöhten und verbreiterten Gewindegängen vorzusehen.

Wird eine gewindeformende Schraube mit dem beschriebenen Kalibrierabschnitt in eine Werkstückbohrung eingedreht, so werden, je nach Lage des Kalibrierabschnittes auf dem Schraubenschaft, von Beginn an oder erst nach tieferem Eindrehen, Innengewinderillen erzeugt, die dem höheren, breiteren Kalibriergewindegang entsprechen.

In diesen Gewinderillen werden die niedrigeren, schmäleren Gewindegänge des nachfolgenden geraden Schraubenschaftabschnittes trotz elastischer Rückfederung des geformten Innengewindes mit leichtem Gewindespiel, d.h. praktisch ohne Reibung, laufen, wie in Fig. 3 gezeigt ist.

Aus der Fig. 3 geht auch hervor, dass die in Richtung des Pfeiles 9 in die Durchgangsbohrung des Werkstückes 11 eingedrehte Gewindeformschraube mit ihrem Kalibrierabschnitt 4 das Innengewinde 12 geformt hat. Die Spitze der Schraube und auch bereits ein Teil des Kalibrierabschnittes 4 sind auf der Rückseite 13 des Werkstückes 11 aus der Bohrung ausgetreten. Zwischen dem Innengewinde 12 und dem Gewinde des geraden Schaftabschnittes 5 ist das Gewindespiel e vorhanden.

Das durch den Kalibriergewindegang 7 verdrängte Werkstückmaterial wird plastisch verformt und fliesst in die Ausgleichsrillen beidseits des erhöhten Kalibriergewindezahnes. Im Bereich des Schraubengewindegrundes der geraden Schaftabschnitte 5a, 5b muss es mit der Spitze des geformten Innengewindes nicht zu Ueberdeckung kommen, wenn der Kernlochdurchmesser im Werkstück entsprechend gewählt wird.

Bei Werkstücken mit Durchgangsbohrung wird das erforderliche Schraubendrehmoment nach dem Austritt des Kalibrierschnittes auf der Rückseite praktisch auf Null absinken.

In Sacklochbohrungen wird das erforderliche Schraubeneindrehmoment nur vom Teil 5a des Schraubenschaftes vor dem Kalibrierabschnitt und durch diesen selber, aber nicht vom nachfolgenden Abschnitt 5b beeinflusst (Fig. 2).

Man erhält bei Anordnung des Kalibrierabschnittes unmittelbar hinter der konischen Eintrittsspitze der Schraube Schraubeneindrehmomente, die von der Eindrehtiefe nicht be-

- 10 -          0004541

einflusst werden.

Die Anordnung des Kalibrierabschnittes in Schraubenschaftsmitte oder in Kopfnähe erlaubt weitere, technische interessante Anwendungsmöglichkeiten.

Ein im Bereich der Schraubenspitze angeordneter Kalibrierabschnitt kann z.B. als Verliersicherung für die Schraube
dienen. Wird die Schraube nämlich aus dem Werkstück wieder
herausgedreht, so entsteht im Moment des Wiedereintrittes
des Kalibrierabschnittes in die Werkstückrückseite ein
merklicher Drehmomentanstieg, der eine Folge der Werkstoffreibung im nun wieder spielfreien Gewindesitz ist.

Die Wirkung des Kalibrierabschnittes als Gewindesicherung
ist nicht beschränkt auf Gewindeformschrauben. Der Kalibrierabschnitt lässt sich auch auf Schraubengewinde, die
in geschnittene Innengewinde eingedreht werden, an einer
gewünschten Stelle anbringen (Fig. 4). Dadurch kann der
Schraube in einer genau vorauszubestimmenden Eindrehstellung eine Rüttelsicherheit gegeben werden. Bis zu dieser
Stellung kann sie, im Gegensatz zu anderen bekannten
Schrauben mit erhöhten Gewindegängen über die gesamte
Schraubenschaftlänge, mit einem Drehmoment von annähernd
Null eingedreht werden. Es besteht keine Gefahr, dass die
geschnittenen Innengewinderillen bereits während des Montagevorganges durch Gewindeerhöhungen und Verbreiterungen
an Schraubengewindestellen, wo sie vom Verschraubungsfall
her gar nicht nötig sind, ausgerieben werden und damit der
Sicherungseffekt absinkt.

In Fig. 4 ist das Werkstück mit 11 bezeichnet und die Sicherungsschraube mit 14. Das durch die Schraube eingespannte Teil 15 kann ein elektrischer Anschluss sein. Im
Bereich 5a ist das Gewindespiel e vorhanden, währenddem
die Schraube im Bereich 4 satt sitzt.

Schraubenschäfte mit einem oder mehreren Kalibrierabschnitten können durch spanabhebende Bearbeitung oder besser durch einen an sich bekannten Gewindewalzvorgang hergestellt werden. Dabei ist es für die Erfindung ohne Bedeutung, ob der Querschnitt des Rohlings kreisrund oder, wie bei gewindeformenden Schrauben häufig üblich, polygonal ungleich oder polygonal gleichdick ist.

In den Fig. 5 und 6 ist ein Ausschnitt aus einem Gewindewalzwerkzeug 16 in Aufsicht bzw. im Querschnitt dargestellt.

Die für die Herstellung des Kalibriergewindeganges 7 verantwortliche Walzbackenzone weist im Bereich 17 mindestens eine tiefe Walzbackenrille 18 auf, deren Form das Negativ des erhöhten Gewindeganges 7 ist. Dieser tiefen Rille 18 benachbart sind ein oder zwei erhöhte Walzbackenprofile 19, deren Form dem Negativ der Ausgleichsrillen 8 entspricht. In der Fig. 5 ist die tiefe Rille 18 gestrichelt gezeichnet, und die erhöhten Profile 19 sind punktiert eingetragen.

Die übrigen Walzbackenrillen 20 ausserhalb der Kalibrierwalzbackenzone 17 sind weniger tief bzw. die Walzbackenprofile 21 weniger hoch als die erwähnten Rillen 18 und Profile 19 in der Kalibrierzone.

Die Herstellung der Walzbacke kann beispielsweise so erfolgen, dass, ausgehend von einer Walzbacke mit gleichmässigen Rillen und Profilen, die in Fig. 5 gestrichelten Walzbackenrillen 18 mit einem Bearbeitungswerkzeug, das dem Profil der Walzbackenrille 20 entspricht, auf ca. 10 % grössere Tiefe gearbeitet werden und alle Walzprofile 21, ausgenommen die Kalibrierprofile 19, auf ca. 10 % niedrigere Höhe abgearbeitet werden.

Der Walzbackenkalibrierbereich bietet, unabhängig von seiner Lage auf der Walzbacke, die Möglichkeit, an einer beliebigen Stelle des Schraubenschaftes diesen Bereich aufzuwalzen und durch zusätzliche radiale Materialverdrängung den oder die Kalibriergewindegänge auf dem Schraubenschaft sicher und voll auszubilden, so dass die Schraube ihre Funktion sicher und genau ausführen kann.

Die Länge L des sich auf der Walzbacke wiederholenden Kalibrierbereiches ist mindestens gleich, besser etwas länger als die Länge einer vollständigen Umdrehung einer Schraube auf der Walzbacke.

Beim beschriebenen Kalibrierabschnitt ist gegenüber anderen, bekannten Gewindeformschrauben der Rückstau von Schraubenmaterial in Richtung Schraubenkopf durch das Anwalzen der konischen Schraubenspitze nicht nötig, um den oder die höheren, breiteren Kalibriergewindegänge voll zu füllen.

Patentansprüche:

1. Schraube, insbesondere Gewindeformschraube, mit wenigstens einem geraden Gewindeschaftabschnitt und wenigstens einem Kalibrierabschnitt, der sich über einen oder mehrere Gewindegänge erstreckt, wobei der Aussendurchmesser des Kalibrierabschnittes grösser ist als der Aussendurchmesser des geraden Gewindeschaftabschnittes, dadurch gekennzeichnet, dass der Kerndurchmesser ($d_1$) des Kalibrierabschnittes (4) kleiner ist als der Kerndurchmesser ($d_0$) des geraden Gewindeschaftabschnittes (5, 5a, 5b) und dass die Zahnfussbreite ($m_1$) des Kalibriergewindeganges (7) grösser ist als die Zahnfussbreite ($m_0$) der Gewindegänge des geraden Abschnittes (5, 5a, 5b).

2. Schraube nach Anspruch 1, dadurch gekennzeichnet, dass beidseits des erhöhten Zahnes des Kalibriergewindeganges (7) mindestens je eine Ausgleichsrille (8) mit dem kleineren Kerndurchmesser ($d_1$) angeordnet ist.

3. Schraube nach Anspruch 1, dadurch gekennzeichnet, dass der Gewindezahn des Kalibriergewindeganges (7) im ganzen Gewindeflankenbereich breiter ist als die Gewindezähne des geraden Gewindeschaftabschnittes (5).

4. Schraube nach Anspruch 1, dadurch gekennzeichnet, dass der Kalibrierabschnitt (4) unmittelbar hinter der Schraubenspitze (3) angeordnet ist, und dass sich der gerade Schaftabschnitt (5) zwischen dem Kalibrierabschnitt (4) und dem Schraubenkopf (2) erstreckt.

5. Schraube nach Anspruch 1, gekennzeichnet durch mehrere Kalibrierabschnitte (4) und dazwischen angeordnete

0004541

gerade Schaftabschnitte (5a, 5b).

6.      Gewindewalzwerkzeug zur Herstellung der Schraube gemäss Anspruch 1, dadurch gekennzeichnet, dass eine Walzbackenzone einen Bereich (17) zur Erzeugung des Kalibrierabschnittes (4) aufweist, und dass der Bereich mit mindestens einer gegenüber den anderen Walzbackenrillen (20) tieferen Walzbackenrille (18) versehen ist, deren Form dem Negativ des erhöhten Gewindeganges (7) des Kalibrierabschnittes (4) entspricht.

7.      Gewindewalzwerkzeug nach Anspruch 6, dadurch gekennzeichnet, dass beidseits der tiefen Rille (18) wenigstens je ein gegenüber den anderen Walzbackenprofilen (21) erhöhtes Walzbackenprofil (19) angeordnet ist, dessen Form als Negativ zu den beidseits des erhöhten Gewindeganges (7) vorgesehenen Ausgleichsrillen (8) mit dem kleineren Kerndurchmesser $(d_1)$ ausgebildet ist.

8.      Gewindewalzwerkzeug nach Anspruch 6, dadurch gekennzeichnet, dass die Länge (L) des Bereiches (17) etwa dem Aussenumfang des Schraubenschaftes (5) entspricht.

9.      Gewindewalzwerkzeug nach den Ansprüchen 6 und 7, dadurch gekennzeichnet, dass die Tiefenunterschiede der Rillen (18, 20) und die Höhenunterschiede der Profile (19, 21) je etwa 10 % betragen.

## Fig.1

## Fig. 4

## Fig. 5

## Fig. 6

# Fig. 2

2/2

0004541

Fig. 2

# Fig. 3

Fig. 3

Europäisches
Patentamt

**EUROPÄISCHER RECHERCHENBERICHT**

Nummer der Anmeldung

EP 79 100 407.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 829 696 (D.P. WAGNER) <br> * Fig. 1 bis 5 * <br> -- | 1-3 |
| | US - A - 2 352 540 (W.M. HANNEMAN) <br> * Fig. 6 * <br> -- | 1,2 |
| | US - A - 3 381 733 (G.W. STANWICK) <br> * Fig. 1, Positionen 21, 24, 12 * <br> -- | 1,2 |
| | US - A - 3 972 084 (R.L. REYNOLDS) <br> * Fig. 1 * <br> -- | 1, 6-9 |
| A | DE - A - 1 920 693 (ILLINOIS TOOL WORKS) <br> * ganzes Dokument * <br> -- | |
| A | DE - A - 2 157 373 (TEXTRON) <br> * Fig. 2 * <br> -- | |
| A | DE - A - 2 461 546 (ROCKFORD HEADED PRODUCTS) <br> * Fig. 5 * <br> -- <br> ./.. | |

**KLASSIFIKATION DER ANMELDUNG (Int.Cl.³)**

F 16 B   25/00
B 21 H   3/04
B 21 H   3/06

**RECHERCHIERTE SACHGEBIETE (Int. Cl.³)**

B 21 H   3/00
F 16. B   25/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort <br> Berlin | Abschlußdatum der Recherche <br> 03-05-1979 | Prüfer <br> ZAPP |
|---|---|---|

EPA form 1503.1   06.78

Europäisches
Patentamt

## EUROPÄISCHER RECHERCHENBERICHT

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| A | <u>DE - A - 2 702 538</u> (AACKERSBERG MORTENSEN) <br> * Ansprüche 3, 7, 8 * <br><br> -- | | |
| A | <u>FR - A - 1 343 518</u> (M. MARCHOU) <br> * Fig. 1 * <br><br> -- | | |
| A | <u>US - A - 2 269 476</u> ( O.J. POUPITCH) <br> * Fig. 1, 3 * <br><br> -- | | RECHERCHIERTE SACHGEBIETE (Int. Cl.³) |
| D | <u>DE - B - 2 365 132</u> (KEYSTONE CONSO- LIDATED INDUSTRIES) <br> * Fig. 2 * <br><br> -- | | |
| D | <u>CH - A - 386 182</u> (RESEARCH ENGINEE- RING & MANUFACTURING) <br> * Fig. 1 * <br><br> -- | | |
| D | <u>US - A - 3 875 780</u> (W.A. COCHRUM et al) <br> * Fig. 1 * <br><br> -- | | |
| D | <u>US - A - 3 939 512</u> (W. THURSTON et al) <br> * Fig. 3 * <br><br> ---- | | |